# FASCICULE DE BREVET EUROPEEN

(11) **EP 1 114 706 B1**
(45) Date de publication et mention de la délivrance du brevet: **21.05.2008**
(21) Numéro de dépôt: 01460002.7
(22) Date de dépôt: 04.01.2001
(51) Int. Cl.: B28D 7/04, B23Q 7/06, B23Q 3/00

(54) **Dispositif de positionnement pour pièces à couper, tel un carreau**
Positioniervorrichtung für zu schneidende Werkstücke, wie eine Fliese
Positioning device for workpieces to be cut, such as a tile

(30) Priorité: 07.01.2000 FR 0000156
(43) Date de publication de la demande: 11.07.2001
(73) Titulaire: DIAMANT BOART Société Anonyme, 1190 Bruxelles (BE)
(72) Inventeur: Fouy, Jean-Marie, 45130 Baule (FR)
(74) Mandataire: Maillet, Alain

(56) Documents cités:
- EP-A- 0 936 037
- WO-A-00/43155
- FR-A- 2 389 466
- US-A- 4 454 793
- US-A- 4 651 606
- US-A- 4 793 604
- US-A- 4 976 251
- US-A- 5 373 835

## Description

La présente invention concerne un dispositif de positionnement pour carreaux, destiné à être utilisé sur une machine de coupe, par exemple une machine de coupe à outil de coupe circulaire (voir par exemple US-A-4976251).

De telles machines de coupe comportent généralement un banc au travers duquel fait saillie l'outil de coupe. Une règle de guidage est prévue pour être montée sur le banc de manière à être positionnée parallèlement au plan de coupe de l'outil, à une distance prédéterminée variable de celui-ci.

Une pièce à couper, par exemple un carreau plat de céramique, est posée sur le banc de la machine, puis mise en contact par l'un de ses côtés contre un côté de référence de la règle de guidage tournée vers l'outil de coupe. Elle est alors poussée contre l'outil de coupe préalablement mis en rotation, de manière à être maintenue en contact glissant le carreau avec le côté de référence de la règle de guidage.

On comprendra que la règle peut parfois être bridée sur le banc pour éviter qu'elle ne se déplace pendant la coupe du carreau.

La coupe du carreau est ainsi réalisée parallèlement au côté dudit carreau qui glisse contre la règle de guidage. La largeur de la partie de carreau ainsi coupée est égale à la distance prédéterminée particulière séparant le côté de la règle tourné vers l'outil de coupe et l'outil de coupe lui-même.

Il arrive cependant que l'on souhaite couper le carreau autrement que parallèlement à l'un de ses côtés. On peut alors utiliser une butée d'angle qui peut être montée à coulissement sur la règle de guidage, le long de son côté tourné vers l'outil de coupe. Ce type de butée d'angle comprend généralement un dièdre formé par deux faces perpendiculaires, qui sont destinées respectivement à recevoir les deux côtés adjacents formant une encoignure d'un carreau à couper.

On dispose alors le carreau sur le banc avec une encoignure mise en contact avec les côtés perpendiculaires de la butée d'angle, puis on le déplace contre l'outil de coupe, tout en le guidant dans la butée d'angle qui coulisse alors sur la règle.

La position de la ligne de coupe du carreau est déterminée, d'une part, par la distance séparant la règle de guidage de l'outil de coupe et, d'autre part, par la position angulaire du dièdre de la butée angulaire par rapport à la règle de guidage.

Cette position angulaire du dièdre de la butée angulaire est unique. Bien souvent, la bissectrice des deux faces perpendiculaires du dièdre est perpendiculaire à la règle de guidage.

Cependant, bien que ce type de coupe soit fréquemment utilisé, il est avantageux de pouvoir positionner rapidement des pièces à couper sur le banc de la machine de coupe dans d'autres positions angulaires remarquables.

Le but de l'invention est donc de proposer un dispositif de positionnement pour machine de coupe, permettant la coupe de carreaux dans de nombreuses positions remarquables.

A cet effet, le dispositif de positionnement d'une pièce à couper posée sur le banc d'une machine de coupe est remarquable en ce qu'il comporte un positionneur angulaire qui, d'une part, est pourvu de moyens pour coulisser dans un plan parallèle au plan dudit banc et dans une direction de guidage en translation parallèle au plan de coupe d'un outil de coupe de ladite machine de coupe, de facettes et de moyens qui sont prévus pour positionner la pièce à couper par rapport audit plan dudit outil de coupe dans une pluralité de positions angulaires remarquables fixes et qui sont constitués de deux desdites facettes perpendiculaires l'une à l'autre et formant chacune un angle remarquable fixe par rapport à ladite direction de guidage en translation.

Ainsi, le dispositif de positionnement de l'invention permet la coupe de carreaux dans un grand nombre de positions remarquables fixes.

Selon une autre caractéristique de l'invention, les angles respectivement formés par lesdites positions angulaires avec la direction de guidage en translation sont des multiples de 5°.

Selon une autre caractéristique de l'invention, le positionneur angulaire est aussi constitué d'une embase à polygone concave associée latéralement à chacun de ses points cardinaux par une butée constituée d'un polyèdre, les moyens pour positionner la pièce à couper par rapport audit plan dudit outil de coupe dans une pluralité de positions angulaires remarquables fixes étant constitués, d'une part, de côtés du polygone concave de l'embase et, d'autre part, de facettes du polyèdre de chacune des butées qui sont perpendiculaires deux à deux.

Selon une autre caractéristique de l'invention, chacun des côtés du polygone concave de l'embase forme un angle remarquable fixe avec une direction de guidage en translation sur une règle de guidage, ladite règle étant prévue pour être montée sur ledit parallèlement à la direction parallèle au plan de coupe d'un outil de coupe.

Selon une autre caractéristique de l'invention, le positionneur angulaire est prévu pour être monté à coulissement sur la règle de guidage.

Selon une autre caractéristique de l'invention, le positionneur angulaire comporte, pour assurer son guidage en translation sur la règle de guidage, des facettes d'encoignure disposées sur chacune des butées dans la partie qui chevauche l'embase.

Selon une autre caractéristique de l'invention, la direction de guidage en translation sur la règle de guidage est matérialisée par un plan de référence du positionneur angulaire passant par l'un des quatre plans formés par lesdites facettes d'encoignure, ledit plan de référence étant choisi comme le plus proche du côté considéré, chaque butée chevauchant partiellement par son plan médian, l'embase.

Selon une autre caractéristique de l'invention, les plans formés respectivement par les facettes d'encoignure sont séparés, au jeu près, par une distance égale à la largeur de la règle de guidage de manière à permettre le guidage à coulissement du positionneur angulaire sur la règle de guidage.

Selon une autre caractéristique de l'invention, des jambages situés à chacune des extrémités de la règle de guidage comportent des crantages qui sont prévus pour respectivement coopérer avec des dents formées sur des côtés latéraux du banc.

Selon une autre caractéristique de l'invention, les dents présentent une forme de trapèze.

Selon une autre caractéristique de l'invention, le pas des dents est égal à trois fois le pas des crantages.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un dispositif de positionnement pour pièces à couper, monté sur un banc d'une machine de coupe selon l'invention,
la Fig. 2 représente une vue en coupe d'une extrémité d'une règle de guidage d'un dispositif de positionnement pour pièces à couper, monté sur un banc d'une machine de coupe selon l'invention, et
la Fig. 3 représente une vue de dessus d'un dispositif de positionnement pour pièces à couper, monté sur un banc d'une machine de coupe selon l'invention.

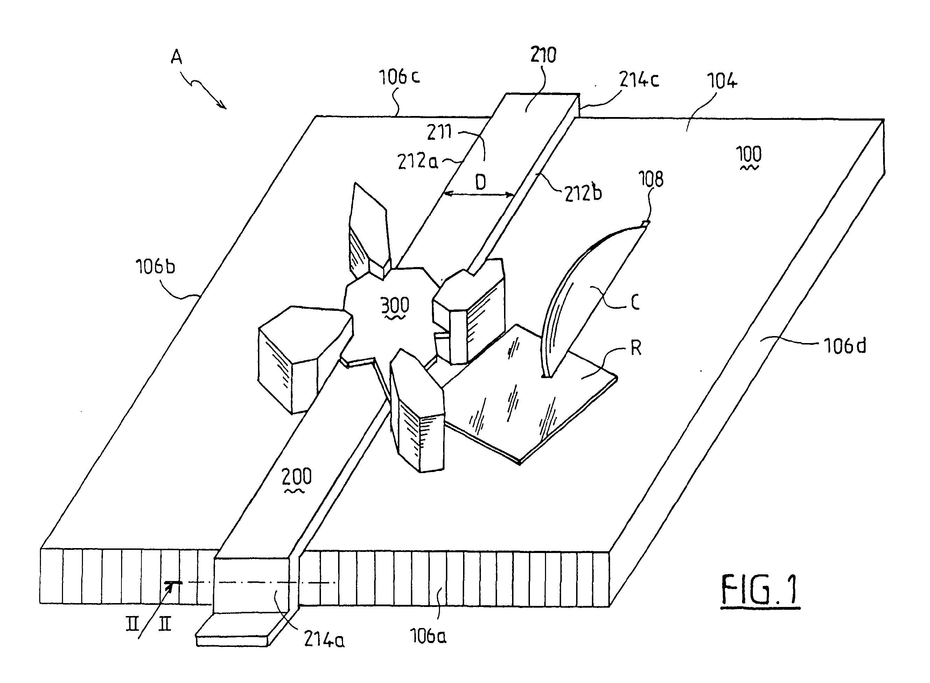

Le dispositif de positionnement A d'une pièce à couper R telle qu'un carreau de céramique, représenté à la Fig. 1, comprend une règle de guidage 200 et un positionneur angulaire 300. Le dispositif de positionnement A est destiné à être positionné sur un banc 100 d'une machine de coupe.

Le banc 100 est formé d'une plaque dont une face supérieure 104 plane est destinée à supporter ladite pièce à couper R. La plaque est bordée par quatre côtés latéraux 106a, 106b, 106c, 106d, et est pourvue d'une découpe 108, au travers de laquelle fait saillie un outil de coupe C, par exemple un outil de coupe circulaire, tel que cela est représenté à cette Fig. Le plan de coupe que peut générer cet outil est perpendiculaire aux côtés latéraux 106a et 106c.

La règle de guidage 200 repose sur la face supérieure 104 du banc 100. Elle est constituée d'un barreau rectiligne 210 comportant notamment un côté supérieur 211, ainsi que deux côtés latéraux 212a et 212b. Sa largeur a une valeur D.

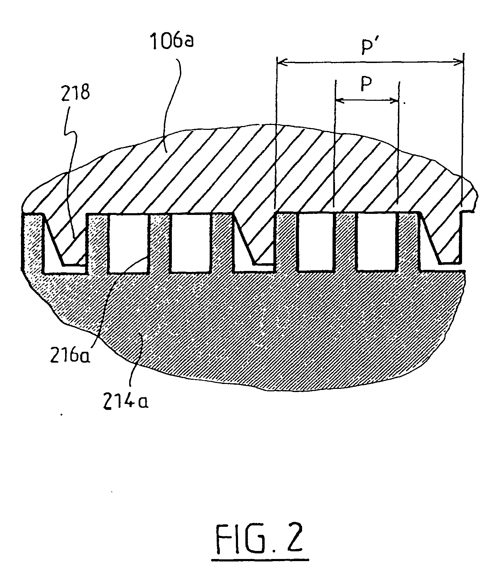

La règle de guidage 200 est terminée à chacune de ses extrémités par un jambage 214a ou 214c. A la Fig. 2, les jambages 214a ou 214c comportent respectivement des crantages 216a et 216c dont seul le crantage 216a est représenté, et qui sont formés sur leurs faces exposées en vis-à-vis. Les crantages 216a ou 216c d'une même face sont espacés d'un pas P. Ces crantages 216a et 216c peuvent coopérer avec respectivement des dents 218 formées sur les côtés latéraux 106a et 106c. Les dents 218 présentent de préférence une section en forme de trapèze, et leur pas P' est égal à trois fois le pas P des crantages 216a, 216c.

Ainsi, le positionnement et le maintien en position de la règle de guidage 200 sur le banc 100 de manière perpendiculaire au plan de coupe que peut générer l'outil de coupe C, sont réalisés en la soulevant et en l'enclenchant verticalement à la position voulue. La précision de positionnement est alors égale à un pas P.

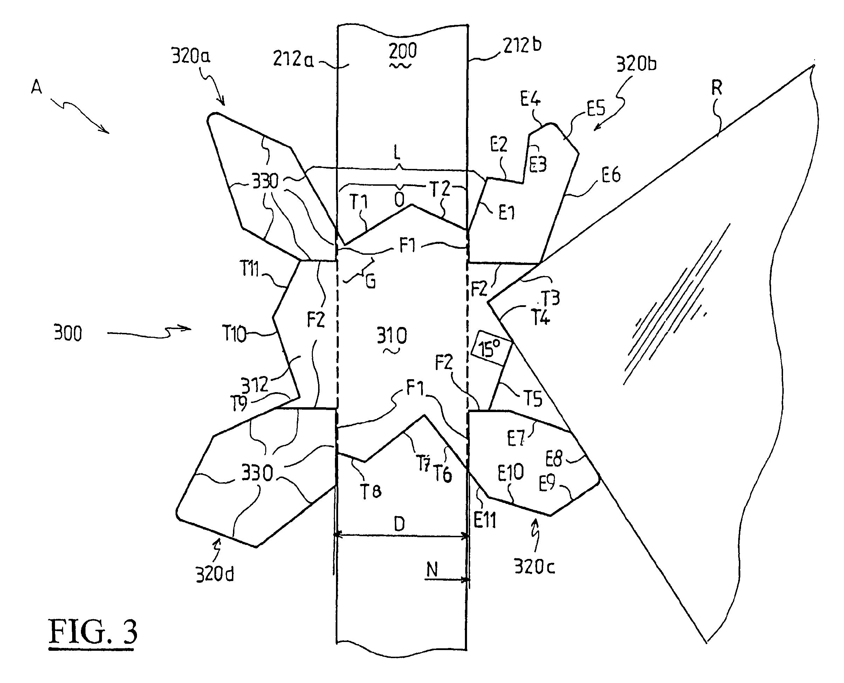

Le positionneur angulaire 300 est destiné à être monté à cheval sur la règle de guidage 200, comme cela est représenté à la Fig. 3.

A cette Fig., le positionneur angulaire 300 est constitué d'une embase 310 associée latéralement et à ses points cardinaux par quatre butées 320a-d.

L'embase 310 d'épaisseur sensiblement constante a un périmètre en forme de polygone concave dont les côtés T forment deux à deux des angles saillants ou rentrants. Elle est destinée à reposer et à être déplacée par sa face recto 312 ou sa face verso 314 (non visible sur cette Fig.), sur le côté supérieur 211 du barreau rectiligne 210.

Chaque butée 320a-d a la forme d'un polyèdre qui chevauche partiellement par son plan médian, l'embase 310. La hauteur des butées 320a-d depuis la face recto 312 ou la face verso 314 est sensiblement égale à la hauteur des côtés latéraux 212a ou 212b de la règle de guidage 200.

Des moyens de positionnement angulaire L de la pièce à couper R par rapport à la règle de guidage 200 sont prévus sur le positionneur angulaire 300 ou sur la règle de guidage 200.

Plus précisément, ces moyens de positionnement angulaire L permettent le positionnement angulaire dans une pluralité de positions angulaires remarquables fixes de la pièce à couper R par rapport à la règle de guidage 200 et, par conséquent, par rapport au plan de l'outil de coupe C.

Ces moyens L sont constitués notamment de moyens de guidage à coulissement G selon une direction de coupe qui est parallèle au plan de coupe de l'outil C. Dans un mode préféré de réalisation, ces moyens de guidage à coulissement G sont constitués de facettes d'encoignure F1 et F2 au nombre de deux par butée 320 et formant de la sorte deux des facettes 330 du polyèdre d'une butée 320. Ces facettes d'encoignure F1 et F2 forment la partie de chacune des butées 320a-d qui chevauche l'embase 310 et sont destinées à permettre le positionnement angulaire à coulissement du dispositif de positionnement A sur la règle de guidage 200.

On remarquera à la Fig. 3 que chacune des facettes d'encoignure F1 ou F2 d'une première butée 320 est située dans un même plan ou est parallèle ou perpendiculaire à chacune des facettes d'encoignure F1 ou F2 d'une butée 320 voisine. Par exemple, la facette d'encoignure F1 de la butée 320a est située dans un même plan parallèle à la facette d'encoignure F1 de la butée 320b.

Les plans formés respectivement par les facettes d'encoignure F1 ou F2 sont séparés, au jeu près, par une distance égale à la largeur D de la règle de guidage 200. Ainsi, lorsque le positionneur angulaire 300 est monté à cheval sur la règle de guidage 200, c'est-à-dire lorsqu'il repose par son embase 310 sur ladite règle de guidage 200, les facettes d'encoignure F1 permettent le guidage à coulissement du dispositif de positionnement A sur les côtés latéraux 212a et 212b de la règle de guidage 200.

On remarquera également que le positionneur angulaire 300 peut être monté à cheval sur la règle de guidage 200 suivant deux positions décalées l'une de l'autre par un angle de 180° passant dans le plan de l'embase 310.

Les facettes d'encoignure F2 permettent quant à elles le positionnement du dispositif de positionnement A avec un décalage angulaire de 90° par rapport au positionnement angulaire permis par les facettes d'encoignure F1.

Comme les facettes d'encoignure F1 et F2 chevauchent de part en part l'embase 310 par ses faces recto 312 et verso 314, le positionneur angulaire 300 peut être retourné et peut ainsi prendre huit positions remarquables lorsqu'il est monté à cheval sur la règle de guidage 200.

Les moyens de positionnement angulaire L de la pièce à couper R par rapport à la règle de guidage 200 sont également constitués de moyens d'orientation O de la pièce à couper R prévus sur le dispositif de positionnement A. Ces moyens d'orientation permettrent de positionner la pièce à couper R par rapport audit plan dudit outil de coupe C.

Ces moyens d'orientation O comprennent, d'une part, des côtés T du polygone concave de l'embase 310 qui sont au nombre de onze à la Fig. 3 et sont référencés de T1 à T11 et, d'autre part, des autres facettes 330 du polyèdre, distinctes des facettes d'encoignure F1 ou F2, et constituées de facettes E.

Les moyens d'orientation O sont référencés angulairement par rapport à un plan de référence N de la manière suivante.

Chaque côté T1-T11 forme un angle particulier avec un plan de référence N passant, soit par les facettes d'encoignure F1, soit par les facettes d'encoignure F2. Le plan de référence pris en compte est le plan le plus proche dudit côté T concerné.

Par exemple, à la Fig. 3, le côté T5 forme un angle de 15° par rapport au plan passant par les facettes d'encoignure F1.

La valeur de chacun de ces angles est avantageusement inscrite sur l'embase 310 à proximité de chacun des côtés T. A la Fig. 3, le chiffre 15° apparaît à proximité du côté T5.

Dans un mode privilégié de réalisation, la valeur des angles formés entre les côtés T et les facettes d'encoignure F1 ou F2 sont des multiples de cinq degrés.

Pour un meilleur positionnement de la pièce à couper R dans le positionneur angulaire 300, chacun des côtés T1-T11 est prolongé dans un même plan par une facette E d'un polyèdre d'une butée 320.

Pour des raisons de clarté, seules les facettes El à E10 des polyèdres des butées 320b et 320c du positionneur angulaire 300 sont référencées à la Fig. 3.

Par exemple, le côté T4 est prolongé par la facette E8.

Chaque côté T forme également un angle droit avec une seconde facette E du polyèdre d'une butée 320. Par exemple, le côté T5 forme un angle droit avec la facette E7. Par cette construction, il est possible de positionner les côtés adjacents formant l'encoignure d'une pièce à couper R contre respectivement un côté T prolongé d'une facette E et une autre facette E du positionneur angulaire 300.

En positionnant convenablement le positionneur angulaire 300 à cheval sur la règle de guidage 200, c'est-à-dire en présentant un des plans de référence N du positionneur angulaire 300 contre le côté latéral 212b, on peut orienter la pièce à couper R sur le positionneur angulaire 300 dans des positions angulaires remarquables où ses côtés adjacents ne sont pas parallèles à ladite règle de guidage 200.

La règle de guidage 200 est positionnée sur le banc 100 de la machine de coupe à une distance particulière de l'outil de coupe C, par exemple à l'aide d'un réglet.

Le positionneur angulaire 300 est monté à cheval sur la règle de guidage 200 dans une position particulière. Pour y parvenir, on définit l'angle de coupe que doit former la ligne de coupe réalisée par l'outil de coupe C avec l'un des côtés de la pièce à couper R. Puis, l'on recherche sur l'embase 310 la valeur marquée de cet angle et l'on positionne le positionneur angulaire 300 sur la règle de guidage 200 de manière à ce que le côté T correspondant à cette valeur soit positionné entre la règle de guidage 200 et l'outil de coupe C.

On met alors en contact les côtés adjacents formant l'encoignure d'une pièce à couper R contre respectivement le côté T et la facette E perpendiculaire audit côté T du positionneur angulaire 300.

On déplace ensuite la pièce à couper R positionnée dans le dispositif de positionnement A en direction de l'outil de coupe C préalablement mis en marche, puis on coupe la pièce à couper R.

Le dispositif de positionnement de l'invention permet de réaliser la coupe de pièces à couper R autrement que parallèlement à chacun de ses côtés.

Il permet en particulier la coupe de pièces à couper R suivant un angle remarquable par rapport à l'un de ses côtés.

## Revendications

1. Dispositif de positionnement (A) d'une pièce à couper (R) posée sur le banc (100) d'une machine de coupe, **caractérisé en ce qu'**il comporte un positionneur angulaire (300) qui est pourvu de moyens pour coulisser dans un plan parallèle au plan dudit banc (100) et dans une direction de guidage en translation parallèle au plan de coupe d'un outil de coupe (C) de ladite machine de coupe, de facettes (330), et de moyens (O) qui sont prévus pour positionner la pièce à couper (R) par rapport audit plan dudit outil de coupe (C) dans une pluralité de positions angulaires remarquables fixes et qui sont constitués de deux desdites facettes (330) perpendiculaires l'une à l'autre formant chacune un angle remarquable fixe par rapport à ladite direction de guidage en translation.

2. Dispositif de positionnement selon la revendication 1, **caractérisé en ce que** les angles respectivement formés par lesdites positions angulaires avec la direction de guidage en translation sont des multiples de 5°.

3. Dispositif de positionnement selon la revendication 1 ou 2, **caractérisé en ce que** le positionneur angulaire (300) est constitué d'une embase (310) à polygone concave associée latéralement à chacun de ses points cardinaux par une butée (320a-d) constituée d'un polyèdre, les moyens (O) étant constitués, d'une part, de côtés (T) du polygone concave de l'embase (310) et, d'autre part, de facettes (330) du polyèdre de chacune des butées (320a-d) qui sont perpendiculaires deux à deux.

4. Dispositif de positionnement selon la revendication 3, **caractérisé en ce que** chacun des côtés (T) du polygone concave de l'embase (310) forme un angle remarquable fixe avec une direction de guidage en translation sur une règle de guidage (200), ladite règle (200) étant prévue pour être montée sur ledit banc (100) parallèlement à la direction parallèle au plan de coupe d'un outil de coupe (C).

5. Dispositif de positionnement selon la revendication 4, **caractérisé en ce que** ledit positionneur angulaire (300) est prévu pour être monté à coulissement sur ladite règle de guidage (200).

6. Dispositif de positionnement selon la revendication 5, **caractérisé en ce que** ledit positionneur angulaire (300) comporte, pour assurer son guidage en translation sur la règle de guidage (200), des facettes d'encoignure (F1, F2) disposées sur chacune des butées (320a-d) dans la partie qui chevauche l'embase (310).

7. Dispositif de positionnement selon la revendication 6, **caractérisé en ce que** la direction de guidage en translation sur la règle de guidage (200) est matérialisée par un plan de référence (N) du positionneur angulaire (300) passant par l'un des quatre plans formés par lesdites facettes d'encoignure, ledit plan de référence (N) étant choisi comme le plus proche du côté (T) considéré, chaque butée (320a-d) chevauchant partiellement par son plan médian, l'embase (310).

8. Dispositif de positionnement selon la revendication 6 ou 7, **caractérisé en ce que** les plans formés respectivement par les facettes d'encoignure (F1) ou (F2) sont séparés, au jeu près, par une distance égale à la largeur (D) de la règle de guidage (200) de manière à permettre le guidage à coulissement du positionneur angulaire (300) sur la règle de guidage (200).

9. Dispositif de positionnement selon l'une des revendications précédentes, **caractérisé en ce que** des jambages (214a, 214c) situés à chacune des extrémités de la règle de guidage (200) comportent des crantages (216a, 216c) qui sont prévus pour respectivement coopérer avec des dents (218) formées sur des côtés latéraux (106a, 106c) du banc (100).

10. Dispositif de positionnement selon la revendication 9, **caractérisé en ce que** les dents (218) présentent une forme de trapèze.

11. Dispositif de positionnement selon la revendication 9 ou 10, **caractérisé en ce que** le pas (P') des dents (218) est égal à trois fois le pas (P) des crantages (216a, 216c).

## Claims

1. Positioning device (A) for a workpiece (R) to be cut which is positioned on the bench (100) of a cutting machine,
**characterised in that** it comprises an angular positioner (300) which is provided with means for sliding in a plane parallel with the plane of the bench (100) and in a direction for guiding in translation parallel with the cutting plane of a cutting tool (C) of the cutting machine, with faces (330) and with means (O) which are provided in order to position the workpiece (R) to be cut relative to the plane of the cutting tool (C) in a plurality of notable fixed angular positions and which are constituted by two of the faces (330) which are mutually perpendicular and which each form a notable fixed angle relative to the direction for guiding in translation.

2. Positioning device according to claim 1, **characterised in that** the angles which are respectively formed by the angular positions relative to the direction for guiding in translation are multiples of 5°.

3. Positioning device according to claim 1 or 2,
**characterised in that** the angular positioner (300) is constituted by a base (310) in the form of a concave polygon which is associated laterally with each of the cardinal points thereof by means of a stop (320a-d) which is constituted by a polyhedron, the means (O) being constituted, on the one hand, by sides (T) of the concave polygon of the base (310) and, on the other hand, by faces (330) of the polyhedron of each of the stops (320a-d) which are perpendicular in pairs.

4. Positioning device according to claim 3, **characterised in that** each of the sides (T) of the concave polygon of the base (310) forms a notable fixed angle with a direction for guiding in translation on a guiding rule (200), the rule (200) being provided so as to be mounted on the bench (100) parallel with the direction parallel with the cutting plane of a cutting tool (C).

5. Positioning device according to claim 4, **characterised in that** the angular positioner (300) is provided so as to be mounted in a sliding manner on the guiding rule (200).

6. Positioning device according to claim 5, **characterised in that** the angular positioner (300) comprises, in order to guide it in translation on the guiding rule (200), corner faces (F1, F2) which are arranged on each of the stops (320a-d) in the portion which overlaps the base (310).

7. Positioning device according to claim 6, **characterised in that** the direction for guiding in translation on the guiding rule (200) is indicated by a reference plane (N) of the angular positioner (300) which extends through one of the four planes formed by the corner faces, the reference plane (N) being selected as the closest to the side (T) in question, each stop (320a-d) partially overlapping the base (310) with the median plane thereof.

8. Positioning device according to claim 6 or 7,
**characterised in that** the planes formed by the corner faces (F1) or (F2), respectively, are separated to within play tolerances by a distance which is equal to the width (D) of the guiding rule (200) in order to allow the angular positioner (300) to be guided in a sliding manner on the guiding rule (200).

9. Positioning device according to any one of the preceding claims, **characterised in that** members (214a, 214c) which are located at each of the ends of the guiding rule (200) comprise notches (216a, 216c) which are provided in order to co-operate with teeth (218) which are formed on lateral sides (106a, 106c) of the bench (100), respectively.

10. Positioning device according to claim 9, **characterised in that** the teeth (218) are in the form of a trapezium.

11. Positioning device according to claim 9 or 10,
**characterised in that** the pitch (P') of the teeth (218) is equal to three times the pitch (P) of the notches (216a, 216c).

## Patentansprüche

1. Positioniervorrichtung (A) für ein auf den Werktisch (100) einer Schneidmaschine aufgelegtes zuzuschneidendes Werkstück (R), **dadurch gekennzeichnet, dass** sie eine Winkelfeststelleinrichtung (300) aufweist, die mit Mitteln für eine Gleitbewegung von Flächen (330) in einer zur Ebene des Werktisches (100) parallelen Ebene und in einer Führungsrichtung für eine Parallelverschiebung parallel zur Schnittebene eines Schneidwerkzeugs (C) der Schneidmaschine sowie mit Einrichtungen (O) versehen ist, die zur Positionierung des zu schneidenden Werkstücks (R) bezüglich der Ebene des Schneidwerkzeugs (C) in einer Vielzahl von feststehenden und deutlich erkennbaren Winkelstellungen vorgesehen sind, wobei diese aus zwei der Flächen (330) senkrecht zueinander gebildet sind, welche jeweils einen deutlich erkennbaren feststehenden Winkel bezüglich der Führungsrichtung für die Parallelverschiebung bilden.

2. Positioniervorrichtung nach Anspruch 1, **dadurch gekennzeichnet, dass** die von den Winkelpositionen mit der Führungsrichtung für die Parallelverschiebung gebildeten jeweiligen Winkel jeweils ein Mehrfaches von 5° betragen.

3. Positioniervorrichtung nach Anspruch 1 oder 2, **dadurch gekennzeichnet, dass** die Winkelfeststelleinrichtung (300) aus einer Grundplatte (310) mit konkavem Vieleck gebildet ist, die mittels eines aus einem körperlichen Vieleck bestehenden Anschlags (320a - d) seitlich an jedem ihrer Kardinalpunkte verbunden ist, wobei die Einrichtungen (O) einerseits aus Seiten (T) des konkaven Vielecks der Grundplatte (310) und andererseits aus Flächen (330) des körperlichen Vielecks der Anschläge (320a - d) gebildet sind, die jeweils paarweise senkrecht angeordnet sind.

4. Positioniervorrichtung nach Anspruch 3, **dadurch gekennzeichnet, dass** jede der Seiten (T) des konkaven Vielecks der Grundplatte (310) mit einer Führungsrichtung für die Parallelverschiebung auf einer Führungsschiene (200) einen feststehenden und deutlich erkennbaren Winkel bildet, wobei die Schiene (200) auf dem Werktisch (100) parallel zu der Richtung montierbar ist, die parallel zur Schnittebene eines Schneidwerkzeugs (C) verläuft.

5. Positioniervorrichtung nach Anspruch 4, **dadurch gekennzeichnet, dass** die Winkelfeststelleinrichtung (300) auf der Führungsschiene (200) gleitend montierbar ist.

6. Positioniervorrichtung nach Anspruch 5, **dadurch gekennzeichnet, dass** die Winkelfeststelleinrichtung (300) zur Sicherstellung ihrer Führung bei der Parallelverschiebung auf der Führungsschiene (200) Flächen für die inneren Winkel (F1, F2) aufweist, die auf jedem der Anschläge (320a - d) in dem Abschnitt angeordnet sind, der über die Grundplatte (310) greift.

7. Positioniervorrichtung nach Anspruch 6, **dadurch gekennzeichnet, dass** die Führungsrichtung für die Parallelverschiebung auf der Führungsschiene (200) mittels einer Bezugsebene (N) der Winkelfeststelleinrichtung (300) realisiert ist, welche durch eine der vier Ebenen verläuft, die von den Flächen für die inneren Winkel gebildet werden, wobei die Bezugsebene (N) als die der berücksichtigten Seite (T) am nächsten liegende Ebene gewählt wird und wobei jeder Anschlag (320a - d) mit seiner Mittelebene über die Grundplatte (310) greift.

8. Positioniervorrichtung nach Anspruch 6 oder 7, **dadurch gekennzeichnet, dass** die von den Flächen für die inneren Winkel (F1) oder (F2) gebildeten jeweiligen Ebenen mit knappem Spiel von einen Abstand von einander getrennt sind, welcher gleich der Breite (D) der Führungsschiene (200) ist, um so die Führung in der Gleitbewegung der Winkelfeststelleinrichtung (300) auf der Führungsschiene (200) zu ermöglichen.

9. Positioniervorrichtung nach einem der vorhergehenden Ansprüche, **dadurch gekennzeichnet, dass** Stützen (214a, 214c), die sich an jedem der Enden der Führungsschiene (200) befinden, Verzahnungsvertiefungen (216a, 216c) aufweisen, die zum jeweiligen Zusammenwirken mit Zähnen (218) vorgesehen sind, welche auf seitlichen Kanten (106a, 106c) des Werktisches (100) vorgesehen sind.

10. Positioniervorrichtung nach Anspruch 9, **dadurch gekennzeichnet, dass** die Zähne (218) eine Trapezform aufweisen.

11. Positioniervorrichtung nach Anspruch 9 oder 10, **dadurch gekennzeichnet, dass** die Zahnteilung (P') der Zähne (218) gleich dem Dreifachen der Teilung (P) der Verzahnungsvertiefungen (216a, 216c) ist.
